# EUROPÄISCHE PATENTSCHRIFT

(11) **EP 1 409 310 B1**
(45) Veröffentlichungstag und Bekanntmachung des Hinweises auf die Patenterteilung: **29.04.2009**
(21) Anmeldenummer: 02753011.2
(22) Anmeldetag: 11.07.2002
(51) Int. Cl.: B60T 7/22

(54) **VERFAHREN UND VORRICHTUNG ZUR PRÄDIKTION VON BEWEGUNGSTRAJEKTORIEN EINES KRAFTFAHRZEUGS**
METHOD AND DEVICE FOR PREDICTING THE TRAVELLING TRAJECTORIES OF A MOTOR VEHICLE
PROCEDE ET DISPOSITIF PERMETTANT DE PREDIRE LES TRAJECTOIRES D'UN VEHICULE AUTOMOBILE

(30) Priorität: 11.07.2001 DE 10133029
(43) Veröffentlichungstag der Anmeldung: 21.04.2004
(73) Patentinhaber: ROBERT BOSCH GMBH, 70442 Stuttgart (DE)
(72) Erfinder: KNOOP, Michael, 71638 Ludwigsburg (DE); BRAEUCHLE, Goetz, 74934 Reichertshausen (DE); WINNER, Hermann, 76467 Bietigheim (DE); WEILKES, Michael, 74343 Sachsenheim (DE); HEINEBRODT, Martin, 70176 Stuttgart (DE); UHLER, Werner, 76646 Bruchsal (DE); HERMSEN, Wolfgang, D-61267 Neu-Anspach (DE); THIELE, Joachim, 70732 Tamm (DE); STAEMPFLE, Martin, 89075 Ulm (DE); OECHSLE, Fred, 71642 Ludwigsburg (DE); WILHELM, Ulf, 71277 Rutesheim (DE)
(86) Internationale Anmeldenummer: PCT/DE2002/002538
(87) Internationale Veröffentlichungsnummer: WO 2003/006288

(56) Entgegenhaltungen:
- EP-A- 0 967 121
- US-A- 5 332 057
- US-A- 6 084 508

## Beschreibung

Es wird ein Verfahren und eine Vorrichtung zur Prädiktion von Bewegungstrajektorien eines Fahrzeugs zur Verhinderung einer Kollision bzw. zur Verringerung der Unfallschwere vorgeschlagen, bei welchem zur Prädiktion der Bewegungstrajektorien nur die Trajektorien berücksichtigt werden, bei denen infolge einer Kombination aus Lenk- und Bremseingriff die an den Rädern des Fahrzeugs auftretenden Kräfte in etwa so groß sind, wie die maximal vom Rad auf die Straße übertragbare Kraft. Insbesondere bei Systemen, die einen automatischen Brems- und/oder Lenkeingriff zur Vermeidung einer Kollision mit einem weiteren Fahrzeug vorsehen, erfolgt ein automatischer Brems- und/oder Lenkeingriff in Abhängigkeit der vorausberechneten Bewegungstrajektorien.

### Stand der Technik

In den letzten Jahren sind vermehrt adaptive Geschwindigkeitsregler auf den Markt gekommen, die die herkömmliche Regelung eines Tempomaten dahingehend erweitern, dass mittels eines Radar- oder Lidarsystems der Abstand und die Relativgeschwindigkeit des vorherfahrenden Fahrzeugs erkannt wird und diese Daten zur Geschwindigkeits- bzw. Abstandsregelung des eigenen Fahrzeugs genutzt werden.

Ein derartiges System ist in dem Aufsatz "adaptive cruise control system - aspects and development trends" von Winner, Witte et al. SAE-paper 96 10 10, International Congress and Exposition, Detroit, 26.-29. Februar 1996, beschrieben.

In der Veröffentlichung " A Trajectory-Based Approach for the Lateral Control of Vehicle Following Systems" von Gehrig und Stein, veröffentlicht auf der IEEE International Conference on Intelligent Vehicles, 1998, wird ein Algorithmus vorgestellt, der aus den Messdaten eines Radar- oder Lidarsensors eine Bewegungstrajektorie des vorhergehenden Fahrzeugs erstellt und danach das eigene Fahrzeug steuert. Insbesondere bei Bewegungen, in denen beide Fahrzeuge in eine Kurve hineinfahren oder aus einer Kurve herausfahren, werden besondere Ansprüche an einen derartigen Trajektorienalgorithmus gestellt. Ein derartiger Algorithmus zur Bestimmung von Bewegungstrajektorien wird in der oben genannten Schrift beispielhaft dargestellt.

In dem Buch "Fahrwerktechnik: Fahrverhalten" von Zomotor, erschienen im Vogel-Buchverlag, Würzburg, 1. Auflage 1987, werden im Kapitel 2 "Kräfte am Fahrzeug" die theoretischen Grundlagen erläutert, die für ein Verständnis der Kraftübertragung zwischen Reifen und Fahrbahn notwendig sind.

In die US-A-6,084,508 wird ein verfahren aus minderung einer unfallschwere offenbart, wobei Physikalische gensen für ein Ausweichmanöver bestimmt werden.

### Kern und Vorteile der Erfindung

Bei der Vorausberechnung aller möglichen Bewegungstrajektorien eines vorherfahrenden Fahrzeuges oder des eigenen Fahrzeuges wird an das Prädiktionssystem zur Vorausberechnung der weiteren Bewegung eine hohe Anforderung an Rechenleistung gestellt. Dies liegt insbesondere daran, dass eine große Anzahl an möglichen Bewegungen des Fahrzeugs berücksichtigt werden müssen. Insbesondere in gefährlichen Situationen, in denen mit einer starken Verzögerung oder einer starken Lenkbewegung zu rechnen ist, steigt diese große Anzahl an möglichen Bewegungen noch weiter an. Da in diesem Fall eine Echtzeitverarbeitung der Bewegungstrajektorien gewünscht wird, besteht die Notwendigkeit, ein leistungsfähiges Rechensystem einzusetzen. Kern der vorliegenden Erfindung ist es, ein Verfahren gemäß dem Hauptanspruch anzugeben.

Hierbei ist es vorteilhaft, bei der Berechnung der Bewegungstrajektorien, die im Falle einer bevorstehenden Kollision durch Lenkoperationen, Bremsoperationen oder kombinierte Lenk- und Bremsoperationen entstehen können, diese vorausberechnen zu können. Zur Minimierung des Rechenaufwandes wird vorgeschlagen, nur die Trajektorien vorauszuberechnen, bei denen infolge einer Kombination aus Lenk- und Bremseingriff, die an den Rädern des Fahrzeugs auftretende Kraft im Bereich der maximal vom Rad auf die Straße übertragbaren Kraft ist. Es wird angenommen, dass bei Durchfahren einer dieser Trajektorien die bevorstehende Kollision mit einem Objekt verhindert oder im Fall, dass eine Kollision nicht vermeidbar ist, zumindest die Unfallschwere reduziert werden kann. Unter der Unfallschwere ist in diesem Fall das Schadensausmaß der Kollision zu verstehen, das von der Aufprallenergie abhängt aber auch beispielsweise von der Beschaffenheit des Objektes abhängt. So ist die Unfallschwere beispielsweise bei einer Kollision mit einer Betonwand bei gleicher Aufprallenergie größer als bei einer Kollision mit einem vorherfahrenden Fahrzeug.

Vorteilhafterweise kann dieses Verfahren zur Vorausberechnung von Bewegungstrajektorien auf das eigene Fahrzeug, das mit einem Radar-, Lidar- oder Videosystem ausgerüstet ist oder aber auch auf weitere, von der Umfeldsensorik erkannte Fahrzeuge, angewendet werden.

Weiterhin ist es vorteilhaft, dass die Umfeldsensorik aus einem Radarsensor, einem Lidarsensor, einem Videosensor oder aus einer Kombination hieraus besteht. Bei der Ausrüstung eines Fahrzeugs mit mehr als einem Umfeldsensor ist es möglich, eine zuverlässigere und hochauflösendere Detektion zu gewährleisten.

Weiterhin ist es vorteilhaft, dass die maximal vom Rad auf die Straße übertragbare Kraft in Abhängigkeit einer aktuellen Situation korrigiert werden kann. Insbesondere durch Nässe oder Schnee auf der Fahrbahn kann es zu einer Veränderung dieser maximalen, übertragbaren Kraft kommen. Zur Ermittlung des aktuellen Fahrbahnreibwertes, der die maximal vom Rad auf die Straße übertragbare Kraft mitbestimmt, werden die Signale aus einer Antiblockiervorrichtung und/oder einer Fahrdynamikregelung herangezogen. Weiterhin ist auch denkbar, dass Signale weiterer Umfeldsensoren, wie vorteilhafter Weise eines Regensensors oder einer Schlechtwettererkennung mittels der Radar-, Lidar- oder Videosensorik zur Bestimmung des aktuellen Schlupfwertes herangezogen werden.

Es ist außerdem vorteilhaft, dass die prädizierten Bewegungstrajektorien zur automatischen Steuerung der Verzögerungseinrichtungen und/oder zur automatischen Steuerung der Fahrzeuglenkeinrichtungen verwendet werden, um eine bevorstehende Kollision mit einem vorausfahrenden Fahrzeug oder Gegenstand zu vermeiden.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs, vorgesehen ist. Dabei ist auf dem Steuerelement ein Programm gespeichert, das auf einem Rechengerät, insbesondere auf einem Mikroprozessor oder einem Asic, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein read only memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Zeichnungen

Nachfolgend werden Ausführungsbeispiele der Erfindung anhand von Zeichnungen erläutert. Es zeigen
- Figur 1: eine Skizze der Kräfte, die maximal an einem Rad auftreten können, ohne dass dieses seine Bodenhaftung verliert,
- Figur 2: eine beispielhafte Verkehrssituation, in der das erfindungsgemäße Verfahren vorteilhaft eingesetzt wird,
- Figur 3: ein Bremskraft-Zeit-Diagramm der in Figur 2 dargestellten Trajektorien,
- Figur 4: ein Diagramm, das die Ausweichwege der verschiedenen Trajektorien aus Figur 2 darstellt.

### Beschreibung von Ausführungsbeispielen

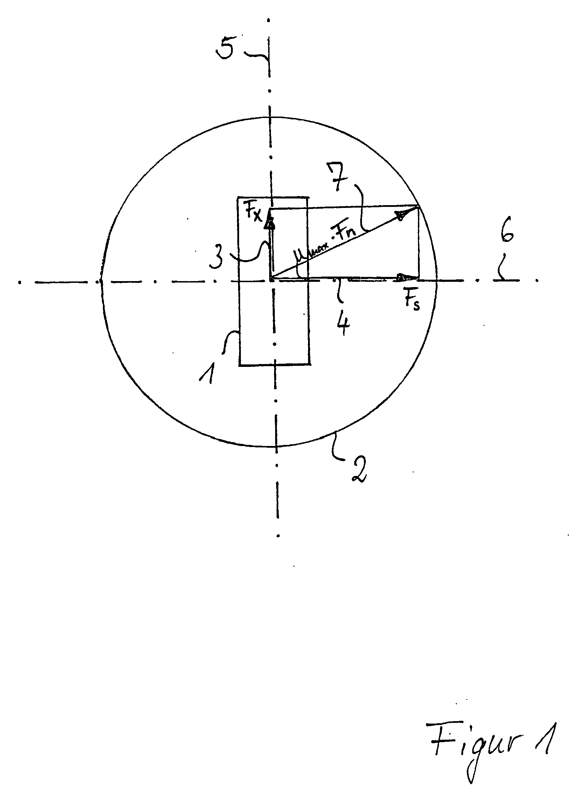

In Figur 1 ist eine Konstruktion dargestellt, bei der die an einem Rad 1 auftretenden Kräfte 3,4,7 eingezeichnet sind. Diese Konstruktion ist auch unter dem Namen Kammscher Kreis bekannt. Es ist ein Rad 1 in der Draufsicht dargestellt, durch das in Längsrichtung eine strichpunktierte Linie 5 sowie in Querrichtung eine strichpunktierte Linie 6 eingezeichnet ist. Die Kräfte, die zwischen einem Rad und der Fahrbahn auftreten, lassen sich in Längsrichtung, also parallel zur strichpunktierten Linie 5 sowie in Querrichtung, also parallel zur strichpunktierten Linie 6 aufteilen. Die zusätzlich auftretende Hochkraft, die durch das Gewicht des Fahrzeugs entsteht, ist in dieser Skizze nicht dargestellt. Es ist ein Kraftpfeil 3 parallel zur Linie 5 eingezeichnet, der die an dem Reifen wirkenden Längskräfte darstellt. Diese Längskräfte sind im Allgemeinen Verzögerungs- und Beschleunigungskräfte, die das Fahrzeug in Geradeausrichtung beeinflussen. Weiterhin ist ein Kraftpfeil 4 eingezeichnet, der parallel zur Querlinie 6 wirkt. Diese Seitenkräfte, die durch diesen Kraftpfeil 4 dargestellt werden, entstehen durch Lenkbewegungen des Fahrzeugs und bewirken eine Richtungsänderung des Fahrzeugs. Weiterhin ist ein Kraftpfeil 7 dargestellt, der die Diagonale eines Rechtecks, das auf den beiden Kraftpfeilen 3 und 4 konstruiert wird, darstellt. Dieser Kraftpfeil 7 verkörpert die resultierende Kraft der beiden Einzelkräfte 3,4 in Längs- und Querrrichtung. Der Kraftpfeil 7 stellt somit einen Ortsvektor mit Ursprung im Kreuzungspunkt der Linien 5 und 6 dar, dessen Länge und Richtung durch die Größen der Einzelkomponenten Längskraft 3 sowie Querkraft 4 bestimmt wird. Trägt man in diese Konstruktion alle Punkte auf, in denen die Resultierende aus Längs- und Seitenkraft gleich groß ist, wie das Produkt aus maximaler Reibungszahl zwischen Fahrbahn und Reifen µmax und der auf das Rad wirkenden (nicht eingezeichneten) Hochkraft Fn, so erhält man einen Kreis, dessen Mittelpunkt dem Kreuzungspunkt der Linien 5 und 6 entspricht. Wird die resultierende Kraft 7 aus der Längskraft 3 und der Querkraft 4 betragsmäßig größer als das Produkt µmax * Fn, so liegt das Ende des Ortsvektors der resultierenden Kraft außerhalb des konstruierten Kreises 2. In diesem Fall hat das Rad die Haftung auf der Fahrbahn bereits verloren. Möchte man ein Fahrzeug so bewegen, dass die Haftung der Räder auf der Fahrbahn jederzeit vorhanden ist, so ist es notwendig, dass die Haftung der Räder auf der Fahrbahn jederzeit vorhanden ist. So ist es notwendig dafür zu sorgen, dass die Resultierende 7 aus der Längskraft 3 und der Querkraft 4 zu jedem Zeitpunkt betragsmäßig kleiner ist als der durch Reibzahl und Hochkraft konstruierte Kreis 2.

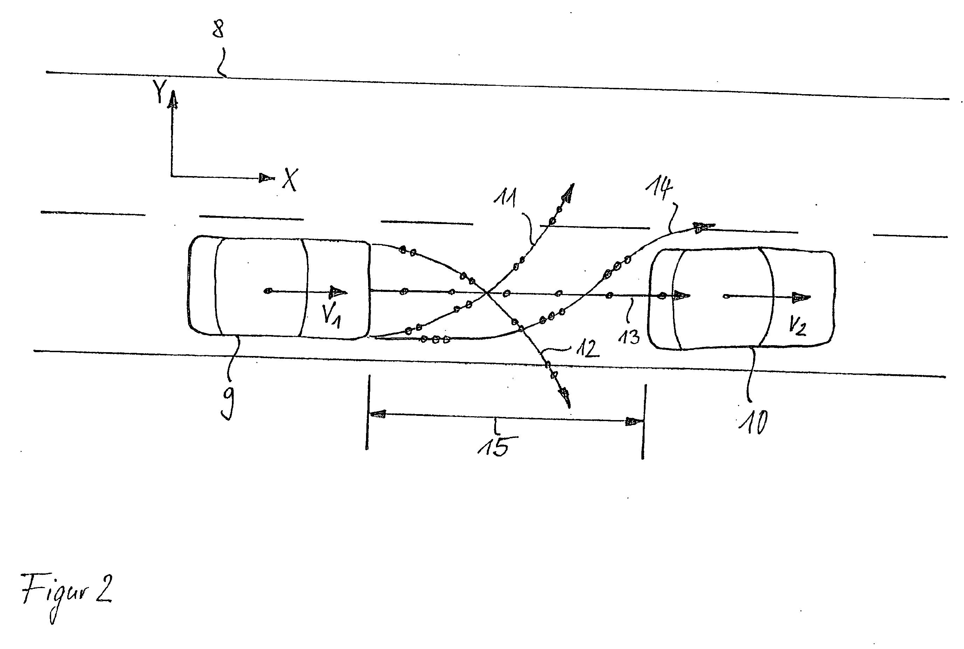

In Figur 2 ist eine mögliche Verkehrssituation dargestellt. Man erkennt eine Straße 8, auf der sich zwei Fahrzeuge 9, 10 bewegen. Die Bewegungen der Fahrzeuge 9, 10 ist durch jeweils einen Geschwindigkeitspfeil v1, v2 angedeutet. Das Fahrzeug 9, das dem vorausfahrenden Fahrzeug 10 folgt, ist mit einer erfindungsgemäßen Vorrichtung zur Durchführung des erfindungsgemäßen Verfahrens ausgerüstet. Ist die Geschwindigkeit v1 des Fahrzeugs 9 sehr viel größer als die Geschwindigkeit v2 des Fahrzeugs 10, so besteht in diesem Fall ein Kollisionsrisiko, da der Abstand 15 der beiden Fahrzeuge nicht ausreicht, um durch eine maximal mögliche Verzögerung des Fahrzeugs 9 diesen Zusammenstoß zu vermeiden. Würde in diesem Fall eine automatisch ausgelöste Notbremsung einsetzen, so würde für die weitere Fahrzeugbewegung eine Trajektorie entstehen, wie sie durch den einfach gepunkteten Pfeil 13 dargestellt ist. In diesem Fall ist es möglich, dass der Abstand 15 zwischen den beiden Fahrzeugen 9 und 10 nicht ausreicht, um rechtzeitig zum Stillstand zu kommen. Im Falle einer derartigen Vollbremsung ohne Lenkbewegung nähme die Längskraft 3 einen maximalen Wert µmax * Fn an, wobei die Seitenkraft 4 gleich Null wäre.

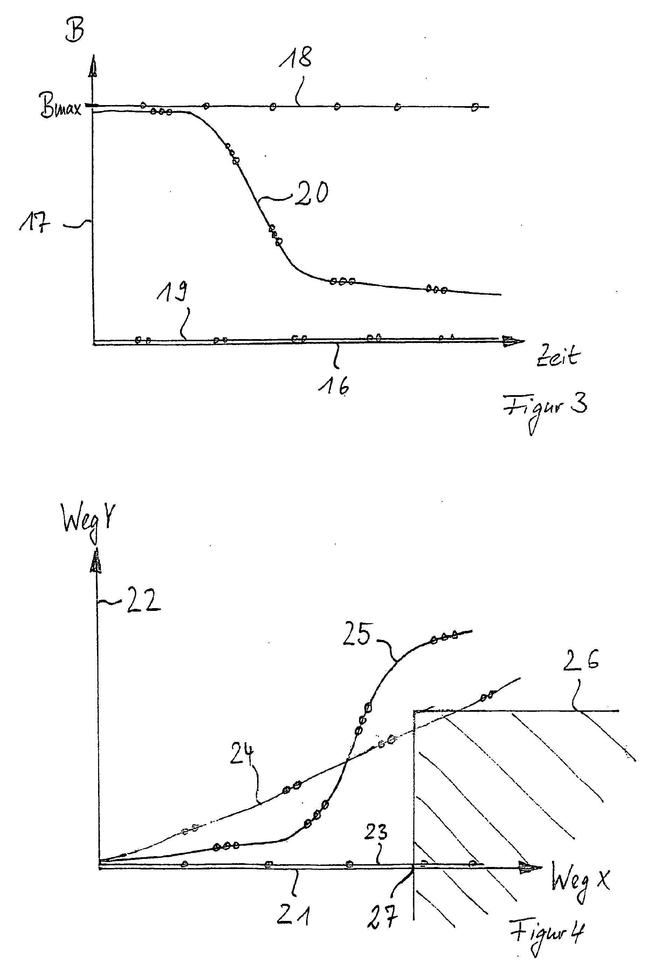

Eine weitere Möglichkeit in der beschriebenen Verkehrssituation einen Zusammenstoß zu vermeiden, wäre, ein reines Ausweichmanöver. In diesem Fall würde man keinen Bremseingriff vornehmen, sondern einen möglichst starken Lenkeinschlag bevorzugen. Eine derartige Vorgehensweise ist durch die zweifach punktierten Bewegungstrajektorien 11 und 12 dargestellt. In diesem Fall hätte man in der Konstruktion des Kammschen Kreises 2 eine Längskraft 3 gleich Null und eine maximale Querkraft 4. Bei diesem Manöver kann es leicht passieren, dass durch einen zu starken Lenkeinschlag die maximal mögliche Seitenkraft überschritten wird und das Fahrzeug ins Schleudern gerät. Idealerweise wäre in der dargestellten Verkehrssituation ein kombinierter Brems- und Lenkeingriff zu bevorzugen, wie er durch die dreifach punktierte Bewegungstrajektorie 14 dargestellt ist. Zur Erläuterung des kombinierten Brems- und Lenkeingriffes ist auf Figur 3 verwiesen. In Figur 3 ist ein Bremskraft-Zeit-Diagramm dargestellt, bei dem auf der Abszisse 16 die Zeit aufgetragen ist und auf der Ordinate 17 die Bremskraft. Für den Fall einer Vollbremsung, wie es in Figur 2 mittels der einfach gepunkteten Bewegungstrajektorie 13 dargestellt ist, ergibt sich ein Bremskraft-Zeit-Diagramm, wie es durch die einfach punktierte Linie 18 dargestellt ist. Im Falle der Notbremsung wäre dies eine waagerechte Linie, die einem maximal möglichen, konstanten Bremskraftwert entspräche. Die zweite Alternative aus Figur 2, ein Ausweichmanöver, wie es durch die zweifach punktierten Bewegungstrajektorien 11 und 12 dargestellt ist, entspräche der zweifach punktierten Kurve 19 im Bremskraft-Zeit-Diagramm der Figur 3. In diesem Fall beträgt die Bremskraft über der Zeitkonstante den Wert Null, da es zu keiner Verzögerung des Fahrzeugs kommt. Das vom Fahrzeug idealerweise durchgeführte, kombinierte Brems- und Lenkmanöver gemäß der dreifach gepunkteten Bewegungstrajektorie 14 ist im Bremskraft-Zeit-Diagramm der Figur 3 als dreifach gepunktete Kurve dargestellt. In diesem Fall wird anfänglich sehr stark verzögert, wodurch die Bremskraft bei kleinen Zeiten einen hohen Wert aufweist. Im weiteren Verlauf fällt die Kurve 20 ab, da die Stärke der Verzögerung reduziert wird, um in einen Lenkeingriff überzugehen. Durch diese Kombination von Bremsen und Lenken wird in einer ersten Phase, in der eine hohe Bremskraft vorliegt, die Geschwindigkeit v1 des Fahrzeugs 9 stark reduziert, um dann in einer zweiten Phase bei nur noch schwacher Verzögerungskraft ein Lenkmanöver durchzuführen, um einen Zusammenstoß mit dem Fahrzeug 10 zu vermeiden.

In Figur 4 ist ein weiteres Diagramm dargestellt, bei dem der seitliche Ausweichweg y gegen den Längsweg x aufgetragen ist. In einem Teilbereich dieses y-x-Diagrammes ist eine schraffierte Fläche 26 dargestellt, die das Hindernis repräsentiert. Diese Fläche 26 stellt den Bereich dar, den die Ausweichtrajektorie nicht berühren darf, um einen Zusammenstoß zu verhindern. Im Falle einer Vollbremsung nach Bewegungstrajektorie 13 aus Figur 2 ergibt sich in diesem y-x-Diagramm eine ebenfalls einfach punktierte Kurve 23, die die räumliche Bewegung des Fahrzeugs angibt. Da in diesem Fall kein Lenkmanöver stattfindet, liegt diese einfach punktierte Linie 23 auf der x-Achse. Infolge des geringen Abstands 15 der beiden Fahrzeuge 9 und 10 berührt die Linie 23 ab dem Punkt 27 den schraffierten Bereich 26, der das Hindernis darstellt. Ab diesem Zeitpunkt kommt es zu einem Zusammenstoß des Fahrzeugs 9 mit dem Objekt, bei dem es sich in dem dargestellten Fall um das Fahrzeug 10 handelt.

Das reine Lenkmanöver, wie es in Figur 2 mittels der zweifach gepunkteten Bewegungstrajektorien 11 und 12 dargestellt ist, stellt sich im y-x-Diagramm der Figur 4 als ebenfalls zweifach gepunktete Linie 24 dar. In Abhängigkeit des Weges x nimmt der Wert y kontinuierlich zu, was die Kurvenfahrt des Fahrzeugs 9 verkörpert. Ab dem Wert 27 berührt auch die Linie 24 wieder den schraffierten Bereich 26, der das Hindernis darstellt. Auch in diesem Fall käme es zu einem Zusammenstoß der beiden Fahrzeuge 9 und 10.

Das kombinierte Brems- /Lenkmanöver gemäß der dreifach gepunkteten Bewegungstrajektorie 14 stellt sich im y-x-Diagramm der Figur 4 als ebenfalls dreifach gepunktete Linie 25 dar. Die anfänglich schwache Lenkbewegung, jedoch die starke Bremsverzögerung lässt die Kurve 25 anfänglich sehr flach verlaufen, im Weiteren steigt diese jedoch sehr stark in Richtung größerer y-Werte an, da die Bremsverzögerung reduziert wird und der Lenkeingriff verstärkt wird. Durch eine stark reduzierte Anfangsgeschwindigkeit ist es möglich, im Späteren eine stärkere Lenkbewegung durchzuführen als es durch die Linie 24 dargestellt ist. In diesem Fall ist es möglich, die Kollision der beiden Fahrzeuge zu verhindern.

Das erfindungsgemäße Verfahren berechnet sämtliche mögliche Bewegungstrajektorien, die zwischen den beiden dargestellten Extremtrajektorien, nämlich einerseits einer reinen . Vollbremsung ohne Lenkeingriff 13 und andererseits einer maximal möglichen Lenkbewegung ohne Bremseingriff 11 bzw. 12, wobei jedoch allen berechneten Trajektorien gemeinsam ist, dass die an den Rädern angreifenden Kräfte in etwa den Kräften entsprechen, die auf dem Kammschen Kreis liegen.

Hierbei ist eine sehr große Anzahl an möglichen Bewegungstrajektorien möglich. Die Trajektorien, die in ihrem Verlauf Punkte besitzen, in denen die resultierende Kraft aus Längs- und Seitenkomponente bedeutend größer oder bedeutend kleiner wird als dies durch den Kammschen Kreis in Figur 1 ermöglicht ist bleiben unberücksichtigt. Hierdurch reduziert sich der Rechenaufwand zur Trajektorienschätzung erheblich. In diesen Fällen würde die betrachtete Trajektorie zu einem Verlust der Radhaftung auf der Straße führen. Als tatsächlich sinnvoll und durchführbar erweisen sich demnach die Bewegungstrajektorien, die über ihren gesamten weiteren Verlauf gesehen zu jedem Zeitpunkt gerade noch eine ausreichende Haftreibung der Räder auf der Fahrbahn haben.

Durch Änderungen der Witterungsverhältnisse oder der Aussentemperatur ist die Haftreibung des Rades auf der Fahrbahn veränderlich. Um diese Veränderungen der Reibzahl µmax zu berücksichtigen, ist vorgesehen, dass der Radius des Kammschen Kreises 2 ständig aktualisiert wird. Dies geschieht beispielsweise durch Berücksichtigung der Aussentemperatur, durch Berücksichtigung der Witterungsverhältnisse, indem ein Signal von einem Regensensor zugeführt wird und indem Eingriffe einer Antiblockiervorrichtung oder einer Fahrdynamikregelung ausgewertet werden und Veränderungen der Reibzahl an das automatische Notbremssystem weitergeleitet werden.

## Patentansprüche

1. Verfahren zur Prädiktion von Bewegungstrajektorien (11,12,13,14) eines Objektes (9) zur Verhinderung einer Kollision oder Minderung einer Unfallschwere,
**dadurch gekennzeichnet,**
**dass** zur Prädiktion der Bewegungstrajektorien des Objektes nur die Trajektorien des Objektes voraus berechnet werden, bei denen infolge einer Kombination aus Lenk- und Bremseingriff die an den Rädern eines Fahrzeugs (9) auftretenden Kräfte (3,4) im Bereich der maximal vom Rad auf die Straße übertragbaren Kraft (7) liegt.

2. Verfahren nach Anspruch 1, **dadurch gekennzeichnet, dass** es sich bei dem Objekt um das Fahrzeug (9) und/oder um ein weiteres von einer Umfeldsensorik erkanntes Objekt (10) handelt.

3. Verfahren nach Anspruch 2, **dadurch gekennzeichnet, dass** es sich bei der Umfeldsensorik um einem Radarsensor, einen Lidarsensor, einen Videosensor oder um eine Kombination aus diesen handelt.

4. Verfahren nach Anspruch 1, **dadurch gekennzeichnet, dass** zur Ermittlung der aktuellen, maximal vom Rad auf die Straße übertragbaren Kraft (7) zusätzliche Signale aus einer Antiblockiervorrichtung und/oder einer Fahrdynamikregelung herangezogen werden, mit denen die Schlupfgrenze der Räder bestimmbar ist.

5. Verfahren nach einem der vorhergehenden Ansprüche, **dadurch gekennzeichnet, dass** ein Zusammenstoß des Fahrzeugs (9) mit einem von der Fahrzeugumfeldsensorik erkannten Objekt (10) vermieden wird oder ein nicht vermeidbarer Aufprall vermindert wird, indem die prädizierten Bewegungstrajektorien (14) zur automatischen Steuerung der Verzögerungseinrichtungen und/oder zur automatischen Steuerung der Fahrzeuglenkeinrichtungen verwendet werden.

6. Vorrichtung zur Prädiktion von Bewegungstrajektorien eines Objektes
wobei die Vorrichtung Signale von einer oder mehrerer Umfeldsensoriken verwendet
Prädiktionsmittel zur Vorausberechnung von Bewegungstrajektorien vorgesehen sind, **dadurch gekennzeichnet, dass** nur die Bewegungstrajektorien von der Vorrichtung vorausberechnet werden, bei denen infolge einer Kombination aus Lenk- und Bremseingriff die an den Rädern eines Fahrzeugs auftretenden Kräfte im Bereich der maximal vom Rad auf die Straße übertragbaren Kraft liegt.

7. Vorrichtung nach Anspruch 6, **dadurch gekennzeichnet, dass** die Bewegungstrajektorien für das Fahrzeug und/oder für weitere, von der Umfeldsensorik erkannten Objekte berechnet werden.

8. Vorrichtung nach Anspruch 6 oder 7, **dadurch gekennzeichnet, dass** in der Vorrichtung Ausgabemittel vorgesehen sind, mit denen die Fahrzeugverzögerungseinrichtungen und/oder die Fahrzeuglenkeinrichtungen automatisch betätigt werden können.

## Claims

1. Method for predicting movement trajectories (11, 12, 13, 14) of an object (9) in order to prevent a collision or reduce the severity of an accident,
**characterized**
**in that**, in order to predict the movement trajectories of the object, only the trajectories of the object for which, owing to a combination of a steering intervention and a braking intervention, the forces (3, 4) occurring at the wheels of a vehicle (9) lie in the region of the maximum force (7) which can be transmitted from the wheel to the road, are calculated in advance.

2. Method according to Claim 1, **characterized in that** the object is the vehicle (9) and/or a further object (10) which is detected by a surroundings sensor system.

3. Method according to Claim 2, **characterized in that** the surroundings sensor system is a radar sensor, a lidar sensor, a video sensor or a combination thereof.

4. Method according to Claim 1, **characterized in that**, in order to determine the current maximum force which can be transmitted (7) from the wheel to the road, additional signals are used from an anti-lock braking device and/or a vehicle dynamics control system, with which signals the slip limit of the wheels can be determined.

5. Method according to one of the preceding claims, **characterized in that** a collision of the vehicle (9) with an object (10) which is detected by the vehicle's surroundings sensor system is avoided or an impact which cannot be avoided is alleviated by using the predicted movement trajectories (14) for automatic control of the deceleration devices and/or for automatic control of the vehicle steering devices.

6. Device for predicting movement trajectories of an object, wherein the device uses signals from one or more surroundings sensor systems, and prediction means are provided for calculating movement trajectories in advance, **characterized in that** only the movement trajectories for which, owing to a combination of a steering intervention and a braking intervention, the forces occurring at the wheels of a vehicle lie in the region of the maximum force which can be transmitted from the wheel to the road, are calculated in advance by the device.

7. Device according to Claim 6, **characterized in that** the movement trajectories are calculated for the vehicle and/or for further objects which are detected by the surroundings sensor system.

8. Device according to Claim 6 or 7, **characterized in that** outputting means with which the vehicle deceleration devices and/or the vehicle steering devices can be activated automatically are provided in the device.

## Revendications

1. Procédé de prédiction des trajectoires de déplacement (11, 12, 13, 14) d'un objet (9), en vue d'empêcher une collision ou de diminuer les encombrements de circulation,
**caractérisé en ce que**
pour la prédiction des trajectoires de déplacement de l'objet, on calcule préalablement uniquement -les trajectoires de l'objet pour lesquelles les forces (3, 4) exercées sur les roues d'un véhicule (9) suite à une combinaison d'actions sur le volant et sur les freins sont de l'ordre de la force maximale (7) qui peut être transmise de la roue à la chaussée.

2. Procédé selon la revendication 1, **caractérisé en ce que** l'objet est le véhicule (9) et/ou un autre objet (10) détecté par un ensemble de détecteurs de l'environnement.

3. Procédé selon la revendication 2, **caractérisé en ce que** l'ensemble de détecteurs de l'environnement est constitué d'un détecteur radar, d'un détecteur dit "lidar", d'un détecteur vidéo ou d'une de leurs combinaisons.

4. Procédé selon la revendication 1, **caractérisé en ce que** pour déterminer la force maximale (7) qui peut être à tout instant transmise de la roue à la chaussée, on utilise des signaux supplémentaires provenant d'un dispositif antiblocage et/ou d'une régulation de la dynamique de roulage qui permettent de déterminer la limite de patinage des roues.

5. Procédé selon l'une des revendications précédentes, **caractérisé en ce qu'**une collision du véhicule (9) avec un objet (10) détecté par l'ensemble de détecteurs de l'environnement du véhicule est évitée ou **en ce qu'**une percussion inévitable est réduite en utilisant les trajectoires prédites de déplacement (14) pour commander automatiquement les dispositifs de ralentissement et/ou pour commander automatiquement les dispositifs de contrôle de direction du véhicule.

6. Dispositif de prédiction des trajectoires de déplacement d'un objet,
le dispositif utilisant les signaux d'un ou plusieurs ensembles de détecteurs de l'environnement et des moyens de prédiction étant prévus pour le calcul préalable des trajectoires de déplacement,
**caractérisé en ce que**
seules sont calculées à l'avance les trajectoires de déplacement du dispositif pour lesquelles les forces exercées sur les roues d'un véhicule sont de l'ordre de la force maximale qui peut être transférée par la roue à la chaussée suite à une combinaison d'actions sur la direction et sur les freins.

7. Dispositif selon la revendication 6, **caractérisé en ce que** les trajectoires de déplacement sont calculées pour le véhicule et/ou pour d'autres objets détectés par l'ensemble de détecteurs de l'environnement.

8. Dispositif selon les revendications 6 ou 7,
**caractérisé en ce que** le dispositif présente des moyens de sortie par lesquels les dispositifs de ralentissement du véhicule et/ou les dispositifs de contrôle de la direction du véhicule peuvent être actionnés automatiquement.
